**Europäisches Patentamt**

**European Patent Office**

**Office européen des brevets**

(19)

(11) Publication number: **0 072 634**
**B1**

(12) **EUROPEAN PATENT SPECIFICATION**

(45) Date of publication of patent specification: **08.10.86**

(51) Int. Cl.⁴: **G 01 B 7/22,** G 01 D 5/24

(21) Application number: **82303931.8**

(22) Date of filing: **26.07.82**

(54) **Extensometers.**

(30) Priority: **14.08.81 GB 8124945**

(43) Date of publication of application:
**23.02.83 Bulletin 83/08**

(45) Publication of the grant of the patent:
**08.10.86 Bulletin 86/41**

(84) Designated Contracting States:
**DE FR GB IT**

(56) References cited:
**US-A-2 892 152**
**US-A-3 487 402**
**US-A-3 729 991**
**US-A-4 197 753**

**PROCEEDINGS OF THE INSTITUTION OF ELECTRICAL ENGINEERS, vol. 119, no. 7, July 1972, pages 897-903, Stevenage, G.B. B.E. NOLTINGK et al.: "High-stability capacitance strain gauge for use at extreme temperatures"**

(73) Proprietor: **UNITED KINGDOM ATOMIC ENERGY AUTHORITY**
**11 Charles II Street**
**London SW1Y 4QP (GB)**

(72) Inventor: **Pugh, Harold**
**14, Wilson Close**
**Thelwall Warrington Cheshire (GB)**

(74) Representative: **Collingwood, Anthony Robert**
**Patents Branch**
**United Kingdom Atomic Energy Authority**
**11 Charles II Street**
**London SW1Y 4QP (GB)**

EP 0 072 634 B1

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

Courier Press, Leamington Spa, England.

## Description

This invention relates to extensometers.

Extensometers are known which comprise a pair of static electrodes and a movable electrode which is displaceable relative to the static electrodes in response to strain of a workpiece to vary the interelectrode capacitances between the movable electrode and each static electrode. US—A—4197753, from which the preamble of Claim 1 is derived, discloses an extensometer of this type. An object of the invention is to provide a capacitive extensometer which is sufficiently robust to be capable of operation for long periods, without maintenance, in a high temperature and hostile environment such as found in a liquid metal cooled nuclear reactor.

According to the invention there is provided an extensometer comprising a pair of static electrodes mounted by a first support and an earthed movable electrode carried by an elongate member so as to be displaceable relative to the static electrodes in response to strain of a workpiece to which the extensometer is secured in use, said elongate member being mounted at one end by a second support and having its other end free with said movable electrode being mounted on its free end, characterised in that a U-shaped flexible tube extends between and is secured to said supports and encloses said elongate member and isolates said member and the static and movable electrodes from the surroundings, said member being of corresponsing U-shape to said tube.

Preferred features of the invention are those defined in Claims 2—8.

The extensometer according to the invention is particularly suitable for operation submerged in a liquid alkali metal coolant of a nuclear reactor construction.

Constructions of extensometer embodying the invention are described by way of example, with reference to the accompanying drawings wherein:

Figure 1 is a perspective view of a first construction,

Figure 2 is a sectional view in the plane II—II of Figure 1,

Figure 3 is a circuit diagram,

Figure 4 is a fragmentary sectional side view of a second construction,

Figure 5 is a fragmentary section end view of the second construction,

Figure 6 is a circuit diagram, and

Figure 7 is a sectional view of a liquid metal cooled nuclear reactor construction.

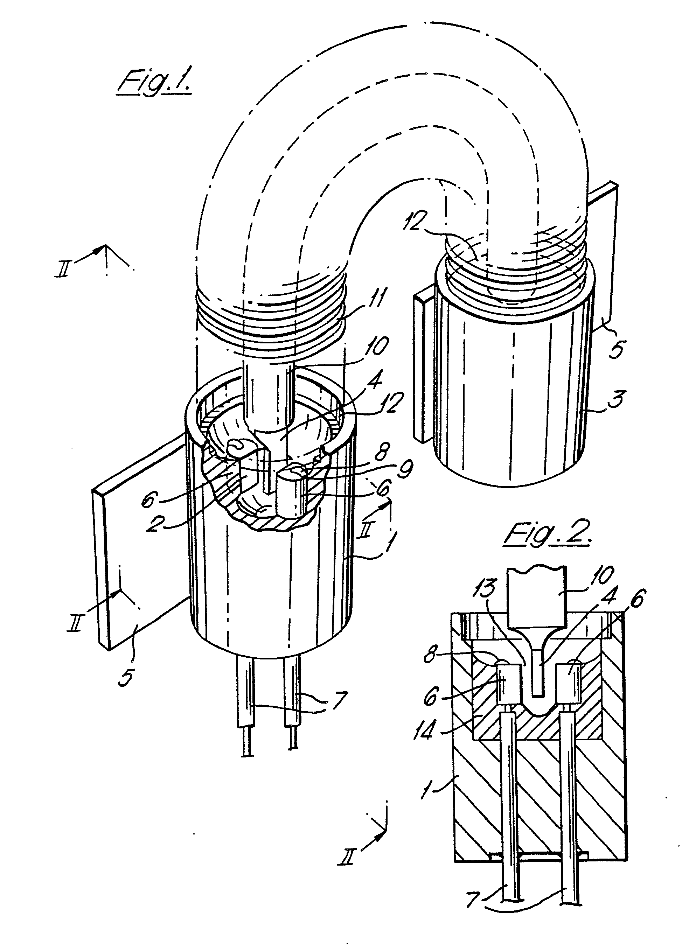

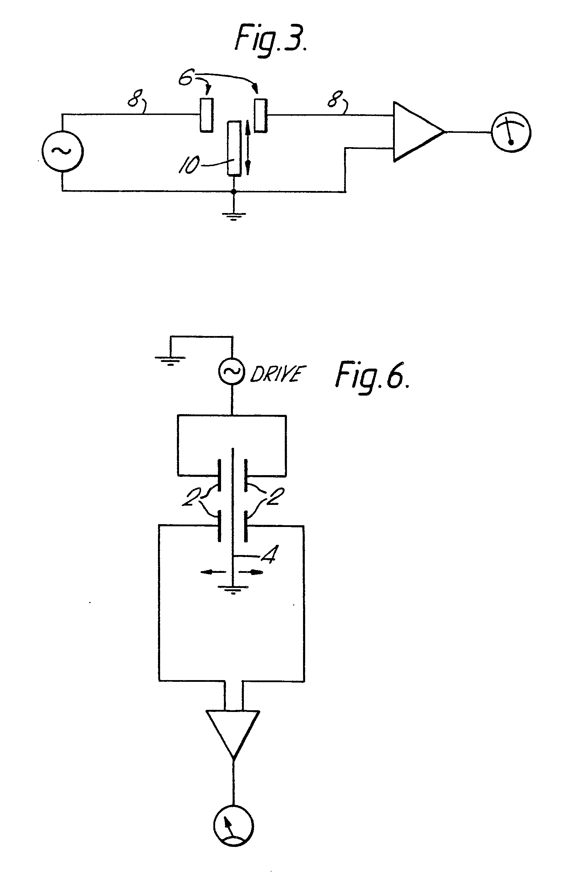

The extensometer illustrated by Figures 1 and 2 comprises a support 1 carrying a pair of static capacitance electrodes 2 and a support 3 which carries an earthed mounting member 10 having a blade end forming a movable electrode 4 disposed between the static electrodes 2. The supports have brackets 5 which provide anchor points for attachment of the supports to structure. The electrodes 2 comprise prepared end regions of metal sheathed mineral insulated cables 7 and are defined by opposed flat faces formed on severed end regions 6 of the sheaths of the cables as shown in Figure 2, the ends of the single cores 8 of the cables being welded at 9 to their respective severed end regions of the sheaths. Figure 3 illustrates the electrical circuit containing the components 6, 8, 10. The member 10 comprises an arcuate arm having the blade formed at a free end whilst the other end is secured in earthing manner to the support 3 by Nicrobraz® or electron beam welding.

As shown in Figure 2 the ends of the mineral insulated cables 7 penetrate one end of the support 1 and are received in a counterbore 13. The sheaths are secured by Nicrobraz® and the severed end regions of the sheaths are secured in the counterbore 13 by vitreous enamel 14 which is fired during assembly of the instrument of 850°C.

In use the instrument is attached by welding of the brackets 5 to structure in such a manner that strain in the structure causes displacement of the blade relative to the electrodes 2 thereby effecting a change in capacitance. The envelope 11 enables the instrument to operate at high temperature in a hostile environment such as, for example, the liquid alkali metal coolant of a nuclear reactor, the convoluted tube serving to exclude coolant and as a thermal screen to reduce the sensitivity of the instrument to temperature transients.

The second construction of extensometer shown in Figures 4 and 5 and 6 is generally similar to the first construction, differing only in the support 1 carrying the static electrodes and the blade end of the member 10. The two metal sheathed mineral insulated cables 7 received in the support 1 each have two conductor cores and the ends of the cables are prepared to provide two pairs of the electrodes 2 by baring the ends of the conductor cores, forming the ends into elongate loops as shown in Figures 4 and 5 and arranging the loops so that they upstand in spaced, parallel pairs whereby the blade end of the member 10 can lie between the loops of each cable. The member 10 comprises an arcuate arm of stainless steel similar to that of the first described construction and a stainless steel blade secured by welding in a step formed at the free end of the member.

In use the instrument is secured to the structure to be monitored and the loops of one cable 7 are connected in parallel to an oscillator whilst the loops of the second cable are connected through a differential amplifier to a voltmeter. The blade provides capacitance couplings between corresponding loops of each cable, the capacitances being variable by displacement of the blade relative to the pairs of loops. Figure 6 illustrates a circuit arrangement embodying the static and movable electrodes.

The described extensometers are generally suitable for use in a hostile environment but they find particular use in a liquid metal cooled nuclear reactor construction for detecting strain in a structure which is submerged in liquid alkali metal such as sodium at temperatures varying between 400°C and 600°C. The extensometers are intended primarily to be attached to a flat surface of the structure to be monitored but in conditions where the surface is curved the second construction of extensometer is most suitable because deflection of the blade due to the curvature is in a direction parallel to the electrodes 2 thereby having little effect on the output signals whereas as with the first-described construction the deflection is towards one of the electrodes 2 thereby affecting a significant change in capacitance and possible damage to the blades.

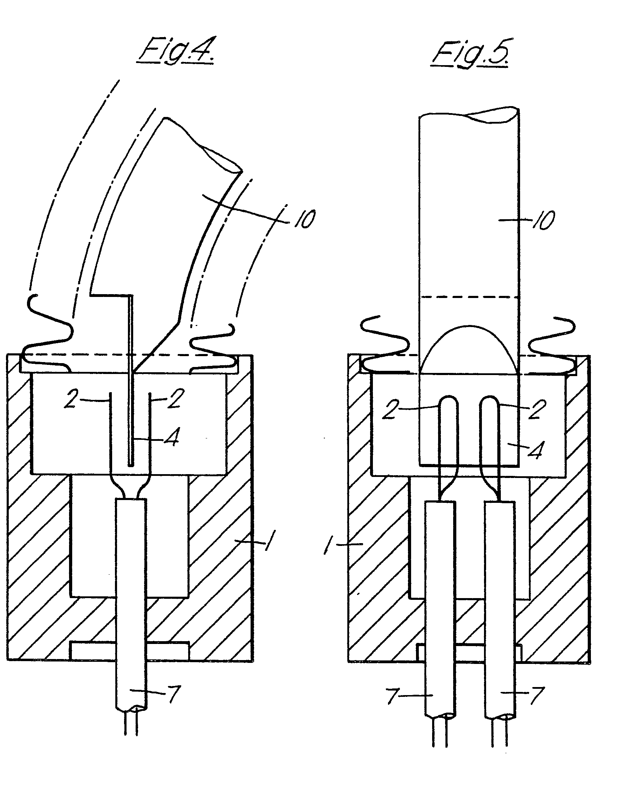

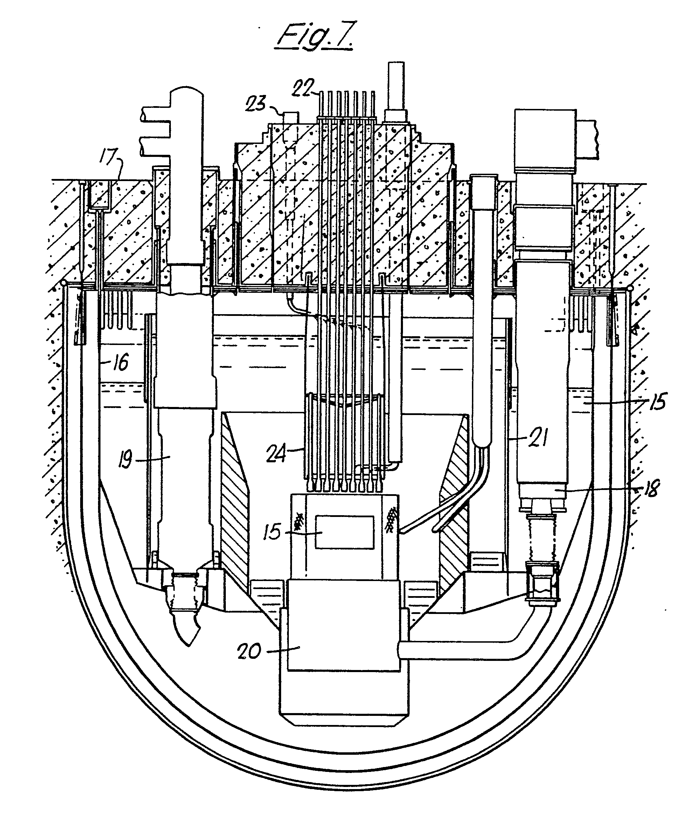

The nuclear reactor construction shown in Figure 7 comprises a fuel assembly 15 submerged in a pool of liquid sodium coolant in a primary vessel 16. The primary vessel is suspended from the roof of a containment vault 17 and there is provided a plurality of coolant pumps 18 and heat exchangers 19 only one each of the pumps and heat exchangers being shown. The fuel assembly 15 mounted on a structure 20 is housed with the heat exchangers in a core tank 21 whilst the pumps 18, which deliver coolant to the structure 20, are disposed outside of the core tank. The core or fuel assembly 15 comprises a plurality of fuel sub-assemblies which upstand from the structure 20 in closely-spaced side-by-side array. Control rods 22 and instrumentation 23 penetrate the roof of the vault and extend to the fuel assembly by way of above core structure 24 carried by the roof.

In operation of the nuclear reactor, coolant is flowed from the pumps 18 to the fuel assembly by way of the structure 20 which distributes the coolant flow throughout the fuel assembly. Flow is upwardly through the fuel assembly in heat exchange therewith, thence from the upper region of the core tank 21 back to the outer region of the pool by way of the heat exchangers 19. Extensometers according to the invention are attached to the support structure 20 for the fuel assembly and to above core structure 24 so that strain therein can be monitored.

## Claims

1. An extensometer comprising a pair of static electrodes (2) mounted by a first support (1) and an earthed movable electrode (4) carried by an elongate member (10) so as to be displaceable relative to the static electrodes (2) in response to strain of a workpiece, to which the extensometer is secured in use, said elongate member (10) being mounted at one end by a second support (3) and having its other end free with said movable electrode (4) being mounted on its free end, characterised in that a U-shaped flexible tube (11) extends between and is secured to said supports (1, 3) and encloses said elongate member (10) and isolates said member (10) and the static and movable electrodes (2, 4) from the surroundings, said member (10) being of corresponding U-shape to said tube (11).

2. An extensometer as claimed in Claim 1 characterised in that each static electrode (2) comprises a prepared end region of a metal sheathed mineral insulated cable (7).

3. An extensometer as claimed in Claim 2 characterised in that the static electrodes (2) are defined by opposed flat faces formed on severed end regions of the sheaths of respective cables (7).

4. An extensometer as claimed in Claim 2 characterised in that the static electrodes comprise conducting cores of respective cables (7), which cores extend beyond the ends of the sheaths and insulation of the cables (7).

5. An extensometer as claimed in Claim 1 or 2, characterised in that two pairs of static electrodes (2) are provided and in which the movable electrode (4) extends between the electrodes (2) of each static pair.

6. An extensometer as claimed in Claim 5 when appendant to Claim 2 characterised in that each mineral insulated cable (7) has two electrically conductive cores each of which is partly exposed and is formed into an elongate loop and the electrodes (2) of each static pair are constituted by the elongate loops of the cable.

7. An extensometer as claimed in any one of Claims 1—6 in which said flexible tube (11) comprises a length of convoluted stainless steel tubing.

8. An extensometer as claimed in Claim 7 in which the end portions of said U-shaped member (10) and U-shaped flexible tube (11) extend transversely of the perpendicular distance between said supports (1, 3).

## Patentansprüche

1. Dehnungsmesser mit einem Paar statischer Elektroden (2), die durch eine erste Halterung (1) angebracht sind, und einer geerdeten, beweglichen Elektrode (4), die von einem länglichen Teil (10) so getragen wird, daß sie relativ zu den statischen Elektroden (2) in Abhängigkeit von der Spannung eines Werkstücks versetzbar ist, an welchem der Dehnungsmesser bei der Benutzung befestigt ist, wobei das längliche Teil (10) am einen Ende durch eine zweite Halterung (3) angebracht ist und mit ihrem anderen Ende frei ist, wobei die bewegliche Elektrode (4) an deren freiem Ende angebracht ist, dadurch gekennzeichnet, daß sich ein U-förmiges, flexibles Rohr (11) zwischen den Halterungen (1, 3) erstreckt, an diesen befestigt ist, das längliche Teil (10) umschließt und das Teil (10) und die statischen und beweglichen Elektroden (2, 4) von der Umgebung isoliert, wobei das Teil (10) entsprechend dem Rohr (11) U-förmig ist.

2. Dehnungsmesser nach Anspruch 1, dadurch gekennzeichnet, daß jede statische Elektrode (2) einen vorbereiteten Endbereich aus einem metallumhüllten, mineralisolierten Kabel (7) aufweist.

3. Dehnungsmesser nach Anspruch 2, dadurch gekennzeichnet, daß die statischen Elektroden (2) durch gegenüberliegende, flache Stirnflächen gebildet sind, die an den abgetrennten Endabschnitten der Umhüllungen der jeweiligen Kabel (7) ausgebildet sind.

4. Dehnungsmesser nach Anspruch 2, dadurch gekennzeichnet, daß die statischen Elektroden Leitungskerne der jeweiligen Kabel (7) aufweisen, wobei sich die Kerne über die Enden der Hüllen und der Isolierung der Kabel (7) erstreckt.

5. Dehnungsmesser nach Anspruch 1 oder 2, dadurch gekennzeichnet, daß zwei Paare statischer Elektroden (2) vorgesehen sind, und daß die bewegliche Elektrode (4) sich zwischen den Elektroden (2) eines jeden statischen Paares erstreckt.

6. Dehnungsmesser nach Anspruch 5 in Verbindung mit Anspruch 2, dadurch gekennzeichnet, daß jedes mineralisolierte Kabel (7) zwei elektrisch leitfähige Kerne aufweist, von welchen jeder teilweise freigelegt ist und zu einer länglichen Schlaufe geformt ist und die Elektroden (2) eines jeden statischen Paares von den länglichen Schlaufen des Kabels gebildet sind.

7. Dehnungsmesser nach jedem der Ansprüche 1 bis 6, wobei das flexible Rohr (11) einen Längenabschnitt aus gewickeltem rostfreiem Stahlrohr aufweist.

8. Dehnungsmesser nach Anspruch 7, wobei die Endabschnitte des U-förmigen Teils (10) und des U-förmigen flexiblen Rohres (11) sich quer zum senkrechten Abstand zwischen den Halterungen (1, 3) erstrecken.

**Revendications**

1. Extensomètre comprenant deux électrodes statiques (2) montées sur un premier support (1) et une électrode mobile (4) mise à la masse portée par un organe allongé (10) afin qu'elle puisse être déplacée par rapport aux électrodes statiques (2) à la suite de déformations d'une pièce à laquelle l'extensomètre est fixé lors de l'utilisation, l'organe, allongé (10) étant monté à une première extrémité sur un second support (3) et ayant son autre extrémité libre, l'électrode mobile (4) étant montée à cette extrémité libre, caractérisé en ce qu'un tube souple (11) ayant une forme en U est disposé entre les supports (1, 3) et est fixé à ceuxci et entoure l'organe allongé (10) et isole cet organe (10) et les électrodes statiques et mobile (2, 4) du milieu environnant, ledit organe (10) ayant une forme en U correspondant à celle du tube (11).

2. Extensomètre selon la revendication 1, caractérisé en ce que chaque électrode statique (2) comporte une région préparée d'extrémité d'un câble (7) à isolant minéral et gaine métallique.

3. Extensomètre selon la revendication 2, caractérisé en ce que les électrodes statiques (2) sont formées par des faces plates opposées formées dans des régions coupées d'extrémités des gaines des câbles respectifs (7).

4. Extensomètre selon la revendication 2, caractérisé en ce que les électrodes statiques sont les âmes conductrices des câbles respectifs (7), les âmes dépassant des extrémités des gaines et de l'isolement des câbles (7).

5. Extensomètre selon l'une des revendications 1 et 2, caractérisé en ce que deux paires d'électrodes statiques (2) sont disposées, et en ce que l'électrode mobile (4) est placée entre les électrodes (2) de chaque paire d'électrodes statiques.

6. Extensomètre selon la revendication 5 dépendant de la revendication 2, caractérisé en ce que chaque câble (7) à isolant minéral a deux âmes conductrices de l'électricité, chacune étant partiellement exposée et formant une boucle allongée, et les électrodes (2) de chaque paire d'électrodes statiques sont constituées par les boucles allongées du câble.

7. Extensomètre selon l'une quelconque des revendications 1 à 6, dans lequel le tube souple (11) est un tronçon de tube courbé d'acier inoxydable.

8. Extensomètre selon la revendication 7, dans lequel les parties d'extrémités de l'organe (10) en U et du tube souple (11) ayant une forme en U sont disposées transversalement à la distance séparant perpendiculairement les supports (1, 3).

Fig.1.

Fig.2.

# Fig.3.

# Fig.6.

Fig.4.

Fig.5.

0 072 634

3

Fig.7